# EUROPÄISCHE PATENTSCHRIFT

(11) **EP 1 653 258 B1**
(45) Veröffentlichungstag und Bekanntmachung des Hinweises auf die Patenterteilung: **21.03.2007**
(21) Anmeldenummer: 04025671.1
(22) Anmeldetag: 28.10.2004
(51) Int. Cl.: G02B 6/00, B60Q 1/30, F21S 8/10

(54) **Fahrzeugleuchte**
Vehicle lamp
Feu de véhicule

(43) Veröffentlichungstag der Anmeldung: 03.05.2006
(73) Patentinhaber: Delphi Technologies, Inc., Troy, MI 48007 (US)
(72) Erfinder: Stanitzok, Ewald, 58256 Ennepetal (DE); Haack, Albrecht, 42369 Wuppertal (DE)
(74) Vertreter: Manitz, Finsterwald & Partner GbR

(56) Entgegenhaltungen:
- EP-A- 0 911 574
- WO-A-99/09349
- DE-U1- 20 306 739
- FR-A- 2 853 392
- US-A- 5 434 754
- US-A1- 2002 071 267

## Beschreibung

Die Erfindung betrifft eine Fahrzeugleuchte, insbesondere Bremsleuchte, mit wenigstens einer Lichtquelle gemäß dem Oberbegriff des Anspruchs 1. Eine Vorrichtung mit den Merkmalen des Oberbegriffs des Anspruchs 1 ist aus der FR 2 853 392 A1 bekannt.

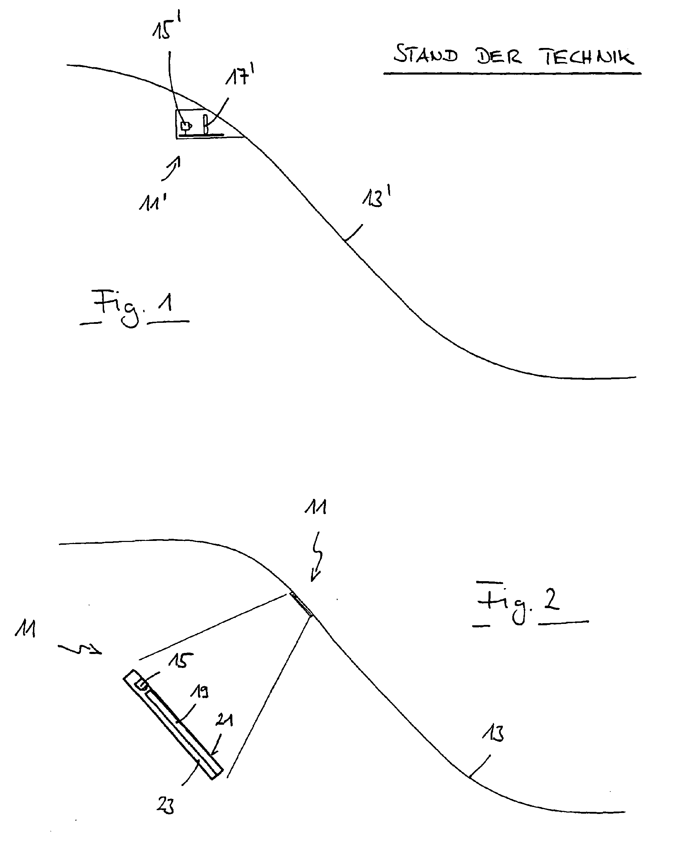

Derartige Fahrzeugleuchten sind in vielfacher Form bekannt. Beispielsweise kann eine derartige Fahrzeugleuchte in Kraftfahrzeugen als eine zusätzliche, dritte Bremsleuchte im Bereich einer Hutablage oder an einer sonstigen Position an der Heckscheibe eines Kraftfahrzeugs, d.h. als eine gegenüber den anderen Bremsleuchten hochgesetzte Bremsleuchte, vorgesehen sein. Derartige hochgesetzte Bremsleuchten weisen üblicherweise mehrere, in einer Reihe angeordnete Lichtquellen, vorzugsweise LEDs, auf, denen in ihrer Hauptabstrahlrichtung jeweils eine lichtbündelnde Linse, insbesondere eine Fresnel-Linse, vorgelagert ist, wie in Fig. 1 dargestellt ist. Anschließend wird das von der Fresnel-Linse ausgerichtete Licht mittels einer Streuscheibe gleichmäßig verteilt, so dass das von der Bremsleuchte abgestrahlte Licht die vom Gesetzgeber geforderte Richtung und Gleichmäßigkeit besitzt.

Zum Erreichen der gewünschten Abstrahlcharakteristik des durch die Bremsleuchte ausgesandten Lichts ist es jedoch erforderlich, dass die Linsen in einem gewissen Abstand zu den Lichtquellen angeordnet sind. Dies hat zur Folge, dass insbesondere bei flachen Heckscheiben, die beispielsweise unter einem Winkel von 20 bis 45° gegenüber der Horizontalen geneigt sind, die Bremsleuchten einen nicht mehr zu vernachlässigenden Bauraum, insbesondere Bautiefe, beanspruchen, so dass unter Umständen der Anbau anderer Bauteile entfallen muss.

Der Erfindung liegt die Aufgabe zugrunde, eine Fahrzeugleuchte der eingangs genannten Art zu schaffen, die insbesondere zur Anbringung an einer Heckscheibe eines Kraftfahrzeugs einen möglichst geringen Bauraum benötigt.

Die Lösung dieser Aufgabe erfolgt durch die Merkmale des Anspruchs 1 und insbesondere dadurch, dass eine Lichtleitereinrichtung vorgesehen ist, in die von der Lichtquelle ausgesandtes Licht einkoppelbar ist und die zur Auskopplung des Lichts oder eines Teils hiervon Auskoppelmittel aufweist, wobei zwischen der Lichtquelle und den Auskoppelmitteln Umlenkmittel derart vorgesehen sind, dass innerhalb der Lichtleitereinrichtung eine Aufweitung und Parallelisierung des Lichts erfolgt.

Bei der erfindungsgemäßen Fahrzeugleuchte wird folglich das von zumindest einer Lichtquelle ausgesandte Licht insbesondere über Einkoppelflächen der Lichtleitereinrichtung in die Lichtleitereinrichtung eingekoppelt, in der das Licht kontrolliert geleitet bzw. gelenkt werden kann. Darüber hinaus weist die Lichtleitereinrichtung Auskoppelmittel auf, durch die das Licht oder ein Teil hiervon wieder aus der Lichtleitereinrichtung auskoppelbar ist.

Die erfindungsgemäße Fahrzeugleuchte zeichnet sich dadurch aus, dass zwischen der Lichtquelle oder den mehreren Lichtquellen, die insbesondere in einer Reihe angeordnet sein können, und den Auskoppelmitteln Umlenkmittel vorgesehen sind, wobei der Begriff "zwischen" so zu verstehen ist, dass die Umlenkmittel hinsichtlich der Bahn bzw. des Weges des Lichts zwischen der oder den Lichtquellen und den Auskoppelmitteln angeordnet sind, d.h. eine geometrische Anordnung der Umlenkmittel zwischen der oder den Lichtquellen und den Auskoppelmitteln ist nicht notwendigerweise erforderlich.

Die Umlenkmittel sind dabei derart ausgebildet, dass insbesondere für jede Lichtquelle eine Aufweitung und Parallelisierung des Lichts erfolgt. Dies ist deshalb von Vorteil, da durch die aktive Aufweitung des Lichts ein größerer Bereich als der durch die Divergenz der jeweiligen Lichtquelle erzeugte Winkelbereich innerhalb der Lichtleitereinrichtung ausgeleuchtet werden kann. Bei einer langgestreckten Fahrzeugleuchte, die zur vollständigen Beleuchtung der Fahrzeugleuchte längs ihrer Längserstreckung mehrere Lichtquellen benötigt, kann der gegenseitige Abstand der Lichtquellen folglich erhöht werden, so dass für die jeweilige Fahrzeugleuchte insgesamt weniger Lichtquellen benötigt werden.

Ferner kann durch die Parallelisierung des Lichts erreicht werden, dass die Lichtstrahlen des Lichts jeweils unter dem gleichen Winkel auf die Auskoppelmittel der Lichtleitereinrichtung treffen, die beispielsweise als eine oder mehrere ebene Reflexionsflächen ausgeführt sind, so dass das Licht mit einem hohen Wirkungsgrad aus der Lichtleitereinrichtung auskoppelbar ist. Der Begriff Parallelisierung soll dahingehend verstanden werden, dass zumindest ein großer Teil des Lichts durch die Umlenkmittel parallelisierbar ist. Die Umlenkmittel können als ebene oder gekrümmte Reflexionsflächen ausgebildet sein.

Vorteilhafte Ausführungsformen der Erfindung sind in den Unteransprüchen, der Beschreibung und der Zeichnung angegeben.

Nach einer bevorzugten Ausführungsform der Erfindung weist die Lichtleitereinrichtung eine plattenartige Grundform auf. Aufgrund der plattenartigen Grundform der Lichtleitereinrichtung kann die Fahrzeugleuchte als Ganzes besonders flach gehalten werden. Die Fahrzeugleuchte ist somit besonders platzsparend an der Heckscheibe eines Kraftfahrzeugs anbringbar. Die Fahrzeugleuchte kann aufgrund ihrer geringen Dicke alternativ aber auch als Bestandteil einer Heckscheibe an dieser integriert sein.

Es ist weiterhin bevorzugt, dass die Umlenkmittel zur mehrfachen, insbesondere zweifachen, Umlenkung des Lichts ausgebildet sind. Hierdurch kann das Licht auf besonders einfache Weise aufgeweitet und parallelisiert werden.

Die Umlenkmittel umfassen zumindest eine an der Lichtleitereinrichtung ausgebildete Inzisur, die innere Reflexionsflächen zur Umlenkung des Lichts definiert. Durch die Inzisur, die beispielsweise als Einschnitt oder Einkerbung innerhalb der Lichtleitereinrichtung ausgebildet ist, entstehen Grenzflächen der Lichtleitereinrichtung zu dem die Lichtleitereinrichtung umgebenden Medium, beispielsweise Luft, so dass die inneren Reflexionsflächen geschaffen werden, an denen das Licht insbesondere unter Totalreflexion reflektiert wird. Vorzugsweise erstreckt sich die Inzisur vollständig durch die Lichtleitereinrichtung hindurch.

Nach einer besonders bevorzugten Ausführungsform der Erfindung sind für jede Lichtquelle mehrere, insbesondere drei, Inzisuren vorgesehen, die spiegelsymmetrisch bezüglich einer Mittenebene angeordnet sind. Bei einer Lichtquelle, die in der Mittenebene liegt und deren Hauptabstrahlrichtung parallel zu der Mittenebene verläuft, kann ein Teil des Lichts in eine Richtung und der andere Teil des Lichts in eine bezüglich der Mittenebene spiegelsymmetrische Richtung umgelenkt werden. Das von der Lichtquelle ausgesandte Licht kann somit spiegelsymmetrisch aufgeweitet werden.

Eine in der Hauptabstrahlrichtung der Lichtquelle angeordnete erste Inzisur weist vordere innere Reflexionsflächen auf, durch die im Wesentlichen entlang der Hauptabstrahlrichtung der Lichtquelle ausgesandtes Licht seitlich umlenkbar ist. In der Hauptabstrahlrichtung der Lichtquelle angeordnet ist eine Inzisur dann, wenn sie durch Licht, das entlang der Hauptabstrahlrichtung der Lichtquelle ausgesandt wird, beaufschlagt wird.

Eine jeweils außerhalb der Hauptabstrahlrichtung der Lichtquelle angeordnete zweite und dritte Inzisur weist jeweils eine vordere und eine hintere innere Reflexionsfläche auf, wobei durch die vorderen inneren Reflexionsflächen Licht, dessen Strahlrichtung um einen von Null verschiedenen Winkel gegenüber der Hauptabstrahlrichtung der Lichtquelle geneigt ist, seitlich und durch die hinteren inneren Reflexionsflächen zuvor bereits seitlich umgelenktes Licht in die Hauptabstrahlrichtung der Lichtquelle umlenkbar ist. Außerhalb der Hauptstrahlrichtung der Lichtquelle angeordnet ist eine Inzisur dann, wenn sie nicht durch Licht, das entlang der Hauptabstrahlrichtung der Lichtquelle ausgesandt wird, beaufschlagt wird.

Eine Außenfläche, insbesondere eine Stirnseite, der Lichtleitereinrichtung weist äußere Reflexionsflächen zur Umlenkung des Lichts auf, die Teil der Umlenkmittel sind. Durch die äußeren Reflexionsflächen ist zuvor bereits seitlich umgelenktes Licht in die Hauptabstrahlrichtung der Lichtquelle umlenkbar. Hierdurch kann die Parallelisierung außerhalb der Hauptabstrahlrichtung der Lichtquelle ausgesandten Lichts auf besonders einfache Weise erreicht werden.

Die äußeren Reflexionsflächen können kaskaden- oder treppenartig angeordnet und/oder in der Hauptabstrahlrichtung der Lichtquelle gegeneinander versetzt sein, so dass divergentes Licht, wie es üblicherweise von einer Lichtquelle ausgesandt wird, über seinen gesamten Winkelbereich hinweg umlenkbar ist. Des Weiteren können die jeweils einer Lichtquelle zugeordneten äußeren Reflexionsflächen spiegelsymmetrisch bezüglich einer Mittenebene angeordnet sein.

Nach einer weiteren Ausgestaltung der Erfindung sind die Umlenkmittel derart angeordnet, dass die Aufweitung und Parallelisierung des Lichts im Wesentlichen in einer Ebene erfolgt. Dies ist insbesondere dann von Vorteil, wenn die Lichtleitereinrichtung eine im Wesentlichen ebene, insbesondere plattenartige Grundform aufweist.

Mehrere Lichtquellen können in einer parallel zu wenigstens einer Reflexionsfläche der Auskoppelmittel verlaufenden Reihe angeordnet sein. Hierdurch wird gewährleistet, dass das Licht aller Lichtquellen unter dem gleichen Winkel gegenüber der oder den Reflexionsflächen der Auskoppelmittel an dieser oder diesen reflektiert wird, so dass insbesondere bei einer langgestreckten Fahrzeugleuchte eine homogene Abstrahlcharakteristik erreicht wird.

Reflexionsflächen zur Umlenkung des Lichts, insbesondere innere Reflexionsflächen, äußere Reflexionsflächen und/oder Reflexionsflächen der Auskoppelmittel, sind bevorzugt als Teil von Prismen oder Facetten oder prismen- oder facettenartigen Vertiefungen ausgebildet.

Ein besonders platzsparender Aufbau der Fahrzeugleuchte, die insbesondere zur Anbringung an einer Heckscheibe eines Kraftfahrzeugs vorgesehen ist, ergibt sich, wenn die Lichtleitereinrichtung gleichzeitig als Gehäuseteil, insbesondere Gehäusehalbschale ausgebildet ist.

Die Erfindung wird nachfolgend beispielhaft unter Bezugnahme auf die Zeichnung erläutert. Es zeigen:
- Fig. 1: eine Seitenansicht einer aus dem Stand der Technik bekannten, an der Heckscheibe eines Kraftfahrzeugs angebrachten Bremsleuchte,
- Fig. 2: eine Seitenansicht einer erfindungsgemäßen, an der Heckscheibe eines Kraftfahrzeugs angebrachten Bremsleuchte mit flacher Bauform,
- Fig. 3a: eine Draufsicht einer schematisch dargestellten erfindungsgemäßen Lichtleitereinrichtung,
- Fig. 3b: die Lichtleitereinrichtung von Fig. 3a mit in die Lichtleitereinrichtung eingekoppeltem Licht,
- Fig. 4a: einen Querschnitt durch eine erfindungsgemäße Bremsleuchte,
- Fig. 4b: die Abstrahlcharakteristik der erfindungsgemäßen Bremsleuchte in der durch den Querschnitt von Fig. 4a definierten Ebene, und

Fig. 1 zeigt eine aus dem Stand der Technik bekannte Bremsleuchte 11', die an einer schematisch dargestellten Heckscheibe 13' eines Kraftfahrzeugs angebracht ist. Die bekannte Bremsleuchte 11' umfasst mehrere LEDs 15', die in einer Reihe angeordnet sind, so dass in der in Fig. 1 gewählten Ansicht lediglich eine LED 15' zu erkennen ist, sowie für jede LED 15' eine davon horizontal nach hinten beabstandet angeordnete Fresnel-Linse 17'. Die bekannte Bremsleuchte 11' weist eine erhebliche Bautiefe auf, so dass sich die Bremsleuchte 11' in den Fahrgastraum des Kraftfahrzeugs hinein erstreckt.

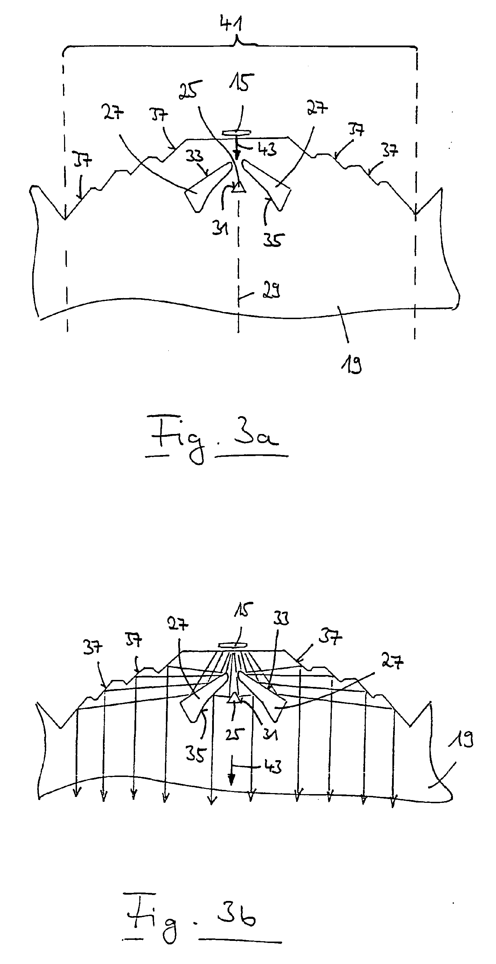

Fig. 2 zeigt eine erfindungsgemäße Bremsleuchte 11, die an der Heckscheibe 13 eines Kraftfahrzeugs angebracht ist. Gemäß der vergrößerten Darstellung der erfindungsgemäßen Bremsleuchte 11 in Fig. 2 umfasst die erfindungsgemäße Bremsleuchte 11 mehrere LEDs 15, die in Analogie zu Fig. 1 einander verdecken, und eine Lichtleitereinrichtung 19, in die von den LEDs 15 ausgesandtes Licht einkoppelbar ist. Bei der dargestellten erfindungsgemäßen Bremsleuchte 11 handelt es sich um eine langgestreckte Bremsleuchte 11, deren Längserstreckung im Wesentlichen durch die Anzahl der nebeneinander angeordneten LEDs 15 bestimmt ist.

Die Lichtleitereinrichtung 19 ist im Wesentlichen plattenförmig ausgebildet und mit einer Flachseite 21, die als Auskoppelfläche ausgelegt ist, durch die das Licht aus der Lichtleitereinrichtung 19 auskoppelbar ist, an der Innenseite der Heckscheibe 13 befestigt. Die Lichtleitereinrichtung 19 ist somit gleichzeitig als Gehäusehalbschale ausgebildet, die mit einer dem Fahrgastraum zugewandten, aus undurchsichtigem Kunststoff bestehenden weiteren Gehäusehalbschale 23 zu einem Gehäuse der Bremsleuchte 11 zusammengesetzt ist, wobei zur Verbesserung der Lichtausbeute der Bremsleuchte 11 zwischen dem Lichtleiter 19 und der weiteren Gehäusehalbschale 23 eine nicht dargestellte Spiegelfolie angeordnet ist.

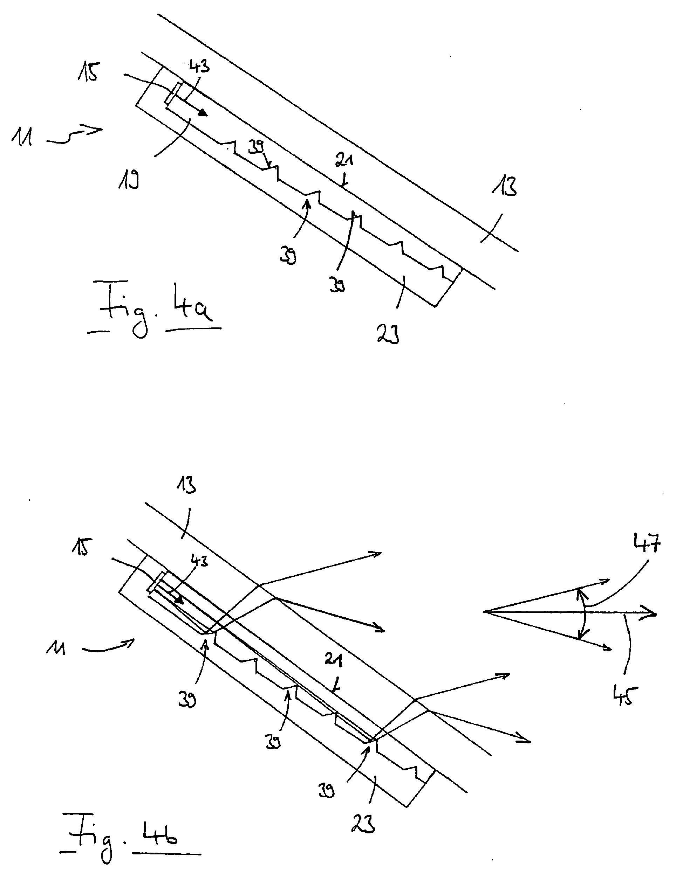

Fig. 3a zeigt die erfindungsgemäße Lichtleitereinrichtung 19 in einem Bereich 41 einer beispielhaft ausgewählten LED 15, wobei die den LEDs 15 jeweils zugeordneten Bereiche der Lichtleitereinrichtung 19 verschiedener LEDs 15 identisch sind, wie in Fig. 3a seitlich des Bereichs 41 andeutungsweise zu erkennen ist. Die Lichtleitereinrichtung 19 weist in dem dargestellten Bereich 41 drei Inzisuren 25, 27 auf, die spiegelsymmetrisch bezüglich einer Mittenebene 29 angeordnet sind. Die Inzisuren 25, 27 erstrecken sich dabei vollständig durch die Lichtleitereinrichtung 19 hindurch.

Die durch die Inzisuren 25, 27 gebildeten Grenzflächen der Lichtleitereinrichtung 19 bilden innere Reflexionsflächen aus, an denen durch die LED 15 in die Lichtleitereinrichtung 19 eingekoppeltes Licht umgelenkt werden kann. Die LED 15 ist in der Mittenebene 29 angeordnet und ihre Hauptabstrahlrichtung 43 verläuft parallel zu der Mittenebene 29. Die Inzisur 25 ist dabei in der Hauptabstrahlrichtung der LED 15 angeordnet, wohingegen die Inzisuren 27 außerhalb der Hauptabstrahlrichtung der LED 15 angeordnet sind.

Die Inzisur 25, die in der in Fig. 3a dargestellten Ansicht im Wesentlichen dreiecksförmig ausgebildet ist, weist zwei vordere innere Reflexionsflächen 31 auf. Die Inzisuren 27, die voneinander beabstandet sind, um die Beaufschlagung der Inzisur 25 mit im Wesentlichen entlang der Hauptabstrahlrichtung 43 der LED 15 ausgesandtem Lichts zu ermöglichen, weisen jeweils eine vordere innere Reflexionsfläche 33 und eine hintere innere Reflexionsfläche 35 auf. Die inneren Reflexionsflächen 31, 33, 35 sind jeweils zur Umlenkung des in die Lichtleitereinrichtung 19 eingekoppelten Lichts vorgesehen, wie an anderer Stelle noch näher erläutert wird.

Darüber hinaus weist die Lichtleitereinrichtung 19 an ihrer Stirnseite, an der die LED 15 benachbart angeordnet ist und Licht in den Lichtleiter 19 einkoppelt, äußere Reflexionsflächen 37 zur Umlenkung des Lichts auf.

Die äußeren Reflexionsflächen 37 sind dabei treppenartig angeordnet und in der Hauptabstrahlrichtung 43 der LED 15 gegeneinander versetzt. Die der dargestellten Lichtquelle 15 zugeordneten äußeren Reflexionsflächen 37 sind ebenfalls spiegelsymmetrisch bezüglich der Mittenebene 29 angeordnet.

Zur Auskopplung des in die Lichtleitereinrichtung 19 eingekoppelten Lichts oder eines Teils hiervon weist die Lichtleitereinrichtung 19 Auskoppelmittel 39 auf (Fig. 4a). Die Auskoppelmittel umfassen mehrere, parallel zueinander verlaufende ebene Reflexionsflächen 39, die sich über die gesamte Längserstreckung der Lichtleitereinrichtung 19 erstrecken. Die ebenen Reflexionsflächen 39 sind Teil von Vertiefungen, die an der der Auskoppelfläche 21 gegenüberliegenden Seite der Lichtleitereinrichtung 19 ausgebildet sind, wobei diese Seite geringfügig gegen die Hauptabstrahlrichtung 43 der LEDs 15 geneigt ist, d.h. der Lichtleiter 19 ist keilförmig zulaufend ausgebildet, damit auch von den LEDs 15 weiter entfernt liegende Reflexionsflächen 39 mit Licht der LEDs 15 beaufschlagt werden können.

Die Inzisuren 25, 27 bzw. die inneren Reflexionsflächen 31, 33, 35 und die äußeren Reflexionsflächen 37, die jeweils Umlenkmittel 25, 27, 31, 33, 35, 37 zur Umlenkung von in die Lichtleitereinrichtung 19 eingekoppeltem Lichts darstellen, sind jeweils zwischen den Lichtquellen 15 und den Auskoppelmitteln 39 angeordnet. Die Reflexionsflächen 31, 33, 35, 37, 39 sind jeweils Teil von Facetten bzw. facettenartigen Vertiefungen.

Nachfolgend wird die Funktionsweise der erfindungsgemäßen Bremsleuchte 11 unter zusätzlicher Bezugnahme auf die Fig. 3b und 4b beschrieben.

Zunächst wird von den Lichtquellen 15 entlang der Hauptabstrahlrichtung 43 der Lichtquellen 15 ausgesandtes Licht in die Lichtleitereinrichtung 19 eingekoppelt. Dabei wird im Wesentlichen entlang der Hauptabstrahlrichtung 43 der Lichtquelle 15 ausgesandtes Licht durch die vorderen inneren Reflexionsflächen 31 der ersten Inzisur 25 seitlich umgelenkt (Fig. 3b). Danach wird das derart seitlich umgelenkte Licht durch die hinteren inneren Reflexionsflächen 35 der Inzisuren 27 wieder in die Hauptabstrahlrichtung 43 der Lichtquelle 15 umgelenkt, so dass sich der an die Inzisuren 27 in der Hauptabstrahlrichtung 43 der LEDs 15 anschließende Bereich der Lichtleitereinrichtung 19, der durch die Inzisuren 27 im Hinblick auf das durch die LEDs 15 ausgesandte Licht gewissermaßen verdeckt wird, mit Licht beaufschlagbar ist.

Außerhalb der Hauptabstrahlrichtung 43 der Lichtquelle 15 ausgesandtes Licht wird durch die vorderen inneren Reflexionsflächen 33 der Inzisuren 27 ebenfalls seitlich abgelenkt, um dann auf die äußeren Reflexionsflächen 37 der Lichtleitereinrichtung 19 zu treffen, die es wiederum in die Hauptabstrahlrichtung 43 der Lichtquelle 15 umlenken.

Die Lichtleitereinrichtung 19 ist folglich derart ausgebildet, dass sie eine Aufweitung und Parallelisierung des durch die Lichtquellen 15 ausgesandten Lichts bewirkt, wobei das Licht homogen über die gesamte Breite des Bereichs 41 verteilt ist. Die Aufweitung und Parallelisierung erfolgt dabei im Wesentlichen in einer Ebene. Die Lichtstrahlen des Lichts werden beim Durchlaufen der Lichtleitereinrichtung 19 durch die Umlenkmittel 25, 27, 31, 33, 35, 37 jeweils zweifach umgelenkt. Die Breite des aufgeweiteten und parallelisierten Lichts beträgt für jede Lichtquelle 15 beispielsweise etwa 2 bis 3 cm. Grundsätzlich ist die Breite der Aufweitung über die Geometrie der Umlenkmittel einstellbar.

Das derart aufgeweitete und parallelisierte Licht wird anschließend durch die ebenen Reflexionsflächen 39, die parallel zu der durch die Lichtquellen 15 gebildeten Reihe verlaufen, aus der Lichtleitereinrichtung 19 durch die Auskoppelfläche 21, mit der die Bremsleuchte 11 an der Heckscheibe 13 anliegt, ausgekoppelt (Fig. 4b). Die Hauptabstrahlrichtung 45 des ausgekoppelten Lichts, das einen Öffnungswinkel 47 besitzt, ist dabei über die Veränderung der Neigung der ebenen Reflexionsflächen 39 gegenüber der Hauptabstrahlrichtung 43 des innerhalb der Lichtleitereinrichtung 19 aufgeweiteten und parallelisierten Lichts einstellbar, so dass die erfindungsgemäße Bremsleuchte 11 an Kraftfahrzeuge mit unterschiedlichen Scheibenwinkeln der Heckscheibe 13 angepasst werden kann.

Die erfindungsgemäße Fahrzeugleuchte wurde unter Bezugnahme auf eine in der Zeichnung dargestellte Bremsleuchte erläutert. Erfindungsgemäß kann es sich bei der Fahrzeugleuchte jedoch auch um jede andere Fahrzeugleuchte, insbesondere Rückleuchte, Bremsleuchte, Nebelschlussleuchte oder Blinkleuchte, handeln.

### Bezugszeichenliste

- 11, 11': Bremsleuchte
- 13, 13': Heckscheibe
- 15, 15': LED
- 17': Fresnel-Linse
- 19: Lichtleitereinrichtung
- 21: Auskoppelfläche
- 23: weitere Gehäusehalbschale
- 25: Inzisur
- 27: Inzisur
- 29: Mittenebene
- 31: vordere innere Reflexionsflächen
- 33: vordere innere Reflexionsflächen
- 35: hintere innere Reflexionsflächen
- 37: äußere Reflexionsflächen
- 39: Auskoppelmittel
- 41: Bereich
- 43: Hauptabstrahlrichtung der LED
- 45: Hauptabstrahlrichtung der Bremsleuchte
- 47: Öffnungswinkel

## Patentansprüche

1. Fahrzeugleuchte, insbesondere Bremsleuchte (11), mit wenigstens einer Lichtquelle (15) und einer Lichtleitereinrichtung (19), in die von der Lichtquelle (15) ausgesandtes Licht einkoppelbar ist und die zur Auskopplung des Lichts oder eines Teils hiervon Auskoppelmittel (39) aufweist,
wobei zwischen der Lichtquelle (15) und den Auskoppelmitteln (39) Umlenkmittel (25, 27, 31, 33, 35, 37) derart vorgesehen sind, dass innerhalb der Lichtleitereinrichtung (19) eine Aufweitung und Parallelisierung des Lichts erfolgt,
wobei die Umlenkmittel (25, 27, 31, 33, 35, 37) zumindest eine an der Lichtleitereinrichtung (19) ausgebildete Inzisur (25, 27) umfassen, die innere Reflexionsflächen (31, 33, 35) zur Umlenkung des Lichts definiert,
wobei eine in der Hauptabstrahlrichtung (43) der Lichtquelle (15) angeordnete erste Inzisur (25) vordere innere Reflexionsflächen (31) aufweist, durch die im Wesentlichen entlang der Hauptabstrahlrichtung (43) der Lichtquelle (15) ausgesandtes Licht seitlich umlenkbar ist, und
wobei eine Außenfläche der Lichtleitereinrichtung (19) äußere Reflexionsflächen (37) zur Umlenkung des Lichts aufweist, die Teil der Umlenkmittel (25, 27, 31, 33, 35, 37) sind und durch die zuvor bereits seitlich umgelenktes Licht in die Hauptabstrahlrichtung (43) der Lichtquelle (15) umlenkbar ist,
**dadurch gekennzeichnet,**
**dass** eine jeweils außerhalb der Hauptabstrahlrichtung (43) der Lichtquelle (15) angeordnete zweite und dritte Inzisur (27) jeweils eine vordere und eine hintere innere Reflexionsfläche (33, 35) aufweisen, wobei durch die vorderen inneren Reflexionsflächen (33) Licht, dessen Strahlrichtung um einen von Null verschiedenen Winkel gegenüber der Hauptabstrahlrichtung (43) der Lichtquelle (15) geneigt ist, seitlich und durch die hinteren inneren Reflexionsflächen (35) zuvor bereits seitlich umgelenktes Licht in die Hauptabstrahlrichtung (43) der Lichtquelle (15) umlenkbar ist.

2. Fahrzeugleuchte nach Anspruch 1,
**dadurch gekennzeichnet,**
**dass** die Lichtleitereinrichtung (19) eine plattenartige Grundform aufweist.

3. Fahrzeugleuchte nach Anspruch 1 oder 2,
**dadurch gekennzeichnet,**
**dass** die Umlenkmittel (25, 27, 31, 33, 35, 37) zur mehrfachen, insbesondere zweifachen, Umlenkung des Lichts ausgebildet sind.

4. Fahrzeugleuchte nach einem der vorhergehenden Ansprüche,
**dadurch gekennzeichnet,**
**dass** sich die Inzisuren (25, 27) vollständig durch die Lichtleitereinrichtung (19) hindurch erstrecken.

5. Fahrzeugleuchte nach einem der vorhergehenden Ansprüche,
**dadurch gekennzeichnet,**
**dass** für jede Lichtquelle (15) mehrere, insbesondere drei, Inzisuren (25, 27) vorgesehen sind, die spiegelsymmetrisch bezüglich einer Mittenebene (29) angeordnet sind.

6. Fahrzeugleuchte nach einem der vorhergehenden Ansprüche,
**dadurch gekennzeichnet,**
**dass** eine Stirnseite der Lichtleitereinrichtung (19) die äußeren Reflexionsflächen (37) aufweist.

7. Fahrzeugleuchte nach einem der vorhergehenden Ansprüche,
**dadurch gekennzeichnet,**
**dass** die äußeren Reflexionsflächen (37) kaskaden- oder treppenartig angeordnet sind.

8. Fahrzeugleuchte nach einem der vorhergehenden Ansprüche,
**dadurch gekennzeichnet,**
**dass** die jeweils einer Lichtquelle (15) zugeordneten äußeren Reflexionsflächen (37) spiegelsymmetrisch bezüglich einer Mittenebene (29) angeordnet sind.

9. Fahrzeugleuchte nach einem der vorhergehenden Ansprüche,
**dadurch gekennzeichnet,**
**dass** die Umlenkmittel (25, 27, 31, 33, 35, 37) derart angeordnet sind, dass die Aufweitung und Parallelisierung des Lichts im Wesentlichen in einer Ebene erfolgt.

10. Fahrzeugleuchte nach einem der vorhergehenden Ansprüche,
**dadurch gekennzeichnet,**
**dass** mehrere Lichtquellen (15) in einer parallel zu wenigstens einer Reflexionsfläche (39) der Auskoppelmittel verlaufenden Reihe angeordnet sind.

11. Fahrzeugleuchte nach einem der vorhergehenden Ansprüche,
**dadurch gekennzeichnet,**
**dass** Reflexionsflächen (31, 33, 35, 37, 39) zur Umlenkung des Lichts als Teil von Prismen oder Facetten oder prismen- oder facettenartigen Vertiefungen ausgebildet sind.

12. Fahrzeugleuchte nach einem der vorhergehenden Ansprüche,
**dadurch gekennzeichnet,**
**dass** die Lichtleitereinrichtung (19) gleichzeitig als Gehäuseteil, insbesondere Gehäusehalbschale, ausgebildet ist.

## Claims

1. A vehicle light, in particular a brake light (11), comprising at least one light source (15) and one light guide device (19), into which light transmitted by the light source (15) can be coupled and which has coupling-out means (39) for the coupling out of the light or of a portion thereof,
wherein deflection means (25, 27, 31, 33, 35, 37) are provided between the light source (15) and the coupling-out means (39) such that an expansion and parallelization of the light takes place inside the light guide device (19),
wherein the deflection means (25, 27, 31, 33, 35, 37) comprise at least one incision (25, 27) which is formed at the light guide device (19) and which defines the inner reflection surfaces (31, 33, 35) for the deflection of the light,
wherein a first incision (25) arranged in the main radiation direction (43) of the light source (15) has front inner reflection surfaces (31) by which light substantially transmitted along the main radiation direction (43) of the light source (15) can be laterally deflected, and
wherein an outer surface of the light guide device (19) has outer reflection surfaces (37) for the deflection of the light which form part of the deflection means (25, 27, 31, 33, 35, 37) and through which light previously already laterally deflected can be deflected into the main radiation direction (43) of the light source (15),
**characterized in that**
a second and a third incision (27) arranged in each case outside the main radiation direction (43) of the light source (15) each have a front and/or a rear inner reflection surface (33, 35), with light whose radiation direction is inclined by an angle different to zero with respect to the main radiation direction (43) of the light source (15) being able to be laterally deflected by the front inner reflection surfaces (33) and light previously already laterally deflected by the rear inner reflection surfaces (35) being able to be deflected into the main radiation direction (43) of the light source (15) by the rear inner reflection surfaces (35).

2. A vehicle light in accordance with claim 1, **characterized in that** the light guide device (19) has a plate-like basic shape.

3. A vehicle light in accordance with claim 1 or claim 2, **characterized in that** the deflection means (25, 27, 31, 33, 35, 37) are designed for the multiple deflection, in particular the double deflection, of the light.

4. A vehicle light in accordance with any one of the preceding claims, **characterized in that** the incisions (25, 27) extend completely through the light guide device (19).

5. A vehicle light in accordance with any one of the preceding claims, **characterized in that** a plurality of incisions (25, 27), in particular three incisions, are provided for each light source (15) and are arranged in specular symmetry with respect to a central plane (29).

6. A vehicle light in accordance with any one of the preceding claims, **characterized in that** a front face of the light guide device (19) has the outer reflection surfaces (37).

7. A vehicle light in accordance with any one of the preceding claims, **characterized in that** the outer reflection surfaces (37) are arranged in cascade form or in stair-like form.

8. A vehicle light in accordance with any one of the preceding claims, **characterized in that** the outer reflection surfaces (37) respectively associated with a light source (15) are arranged with specular symmetry with respect to a central plane (29).

9. A vehicle light in accordance with any one of the preceding claims, **characterized in that** the deflection means (25, 27, 31, 33, 35, 37) are arranged such that the expansion and parallelization of the light takes place substantially in one plane.

10. A vehicle light in accordance with any one of the preceding claims, **characterized in that** a plurality of light sources (15) are arranged in a row extending in parallel to at least one reflection surface (39) of the coupling-out means.

11. A vehicle light in accordance with any one of the preceding claims, **characterized in that** reflection surfaces (31, 33, 35, 37, 39) for the deflection of the light are made as parts of prisms or facets or prism-like or facet-like recesses.

12. A vehicle light in accordance with any one of the preceding claims, **characterized in that** the light guide device (19) is simultaneously made as a housing part, in particular as a half-shell of a housing.

## Revendications

1. Feu pour véhicule, en particulier feu stop (11), comprenant au moins une source de lumière (15) et un dispositif de guidage de lumière (19) dans lequel de la lumière émise par la source de lumière (15) peut être introduite, et qui comporte des moyens de découplage (39) permettant de découpler la lumière, ou une partie de cette lumière,
des moyens de déviation (25, 27, 31, 33, 35, 37) étant prévus entre la source de lumière (15) et les moyens de découplage (39) d'une manière telle que la lumière subisse un élargissement et une mise en faisceau parallèle à l'intérieur du dispositif de guidage de lumière (19),
les moyens de déviation (25, 27, 31, 33, 35, 37) comprenant au moins une incisure (25, 27) aménagée dans le dispositif de guidage de lumière (19), définissant des surfaces réfléchissantes intérieures (31, 33, 35) de déviation de la lumière,
une première incisure (25) disposée dans la direction principale (43) de rayonnement de la source de lumière (15) présentant des surfaces réfléchissantes avant intérieures (31) qui permettent de dévier, sur les côtés, de la lumière émise essentiellement le long de la direction principale (43) de rayonnement de la source de lumière (15), et
une surface extérieure du dispositif de guidage de lumière (19) présentant des surfaces réfléchissantes extérieures (37) permettant de dévier la lumière, ces surfaces faisant partie des moyens de déviation (25, 27, 31, 33, 35, 37) et permettant de dévier de la lumière, préalablement déviée sur les côtés, dans la direction principale (43) de rayonnement de la source de lumière (15),
**caractérisé en ce que**
une deuxième et une troisième incisures (27) respectivement disposées à l'extérieur de la direction principale (43) de rayonnement de la source de lumière (15) présentent chacune des surfaces réfléchissantes intérieures avant et arrière (33, 35), les surfaces réfléchissantes intérieures avant (33) permettant de dévier de la lumière, dont la direction de rayonnement est inclinée selon un angle non nul par rapport à la direction principale (43) de rayonnement de la source de lumière (15), sur les côtés, et les surfaces réfléchissantes intérieures arrière (35) permettant de dévier de la lumière, préalablement déviée sur les côtés, dans la direction principale (43) de rayonnement de la source de lumière (15).

2. Feu pour véhicule selon la revendication 1, **caractérisé en ce que** le dispositif de guidage de lumière (19) présente une configuration de base en forme de plaque.

3. Feu pour véhicule selon la revendication 1 ou 2, **caractérisé en ce que** les moyens de déviation (25, 27, 31, 33, 35, 37) sont configurés pour réaliser une déviation multiple, notamment une double déviation de la lumière.

4. Feu pour véhicule selon l'une des revendications précédentes, **caractérisé en ce que** les incisures (25, 27) s'étendent entièrement à travers tout le dispositif de guidage de lumière (19).

5. Feu pour véhicule selon l'une des revendications précédentes, **caractérisé en ce que** plusieurs, notamment trois incisures (25, 27) sont prévues pour chaque source de lumière (15), en étant disposées de façon symétrique en miroir par rapport à un plan médian (29).

6. Feu pour véhicule selon l'une des revendications précédentes, **caractérisé en ce qu'**une face frontale du dispositif de guidage de lumière (19) présente les surfaces réfléchissantes extérieures (37).

7. Feu pour véhicule selon l'une des revendications précédentes, **caractérisé en ce que** les surfaces réfléchissantes extérieures (37) sont disposées en forme de cascades ou de gradins.

8. Feu pour véhicule selon l'une des revendications précédentes, **caractérisé en ce que** les surfaces réfléchissantes (37) respectivement associées à une source de lumière (15) sont disposées de façon symétrique en miroir par rapport à un plan médian (29).

9. Feu pour véhicule selon l'une des revendications précédentes, **caractérisé en ce que** les moyens de déviation (25, 27, 31, 33, 35, 37) sont disposés de façon telle que l'élargissement et la mise en faisceau parallèle de la lumière s'effectuent essentiellement dans un plan.

10. Feu pour véhicule selon l'une des revendications précédentes, **caractérisé en ce que** plusieurs sources de lumière (15) sont disposées en une rangée s'étendant parallèlement à l'une au moins des surfaces réfléchissantes (39) des moyens de découplage.

11. Feu pour véhicule selon l'une des revendications précédentes, **caractérisé en ce que** des surfaces réfléchissantes (31, 33, 35, 37, 39) destinées à dévier la lumière sont configurées en tant que parties de prismes ou de facettes ou sous forme d'empreintes en forme de prismes ou de facettes.

12. Feu pour véhicule selon l'une des revendications précédentes, **caractérisé en ce que** le dispositif de guidage de lumière (19) est configuré de façon à former en même temps une partie du boîtier, notamment une demi-coquille de boîtier.
